# EUROPEAN PATENT APPLICATION

(11) **EP 0 942 092 A1**
(43) Date of publication of application: **15.09.1999**
(21) Application number: 98104042.1
(22) Date of filing: 06.03.1998
(51) Int. Cl.: D06C 7/00, B29C 35/10, F26B 3/28

(54) **An apparatus for drying and/or polymerizing an impregnated web material**

(71) Applicant: SOLIPAT AG, CH-6300 Zug (CH)
(72) Inventor: Ulli, Andreas, 9305 Berg (CH)
(74) Representative: Hepp, Dieter

(57) **Abstract**

An apparatus for drying and/or polymerizing an impregnated web material (2) includes radiant panels (4) for impinging the web material with radiant energy. In order to create a homogeneous distribution of the radiant energy directed towards the web material (2), additional second radiant panels (5) are arranged substantially perpendicular to the path for the web material and adjacent to the lateral edge areas (26) of the path (25).

## Description

The invention relates to an apparatus for drying and/or polymerizing an impregnated web material according to the preamble of independent claim 1. A web material is moved through at least one treatment chamber, wherein the web material is impinged by radiant heat.

It is known to use radiant heat in combination with preheated fresh air to dry and/or polymerize such impregnated material webs. The purpose of the radiant heat is to induce drying or polymerisation and the preheated fresh is intended to remove volatile material which may be created during drying and/or polymerizing.

In order to achieve a regular drying and/or polymerization rate, it is necessary that the radiation which is created within the treatment chamber is uniformly distributed over the entire width of the web material. If only one radiant panel is used, the lateral edges of the panel are cooled and therefore, radiant heat which is created in the outer parts of the radiant panel is different from the heat which is created in the central parts of the panels.

US 4,697,355 discloses an apparatus which comprises a radiant panel with three independent flow paths, which can be controlled individually and which allow to select different temperatures in different parts of the heating panel, in order to create a homogeneous distribution of the radiation.

This known apparatus has a certain number of drawbacks. Although, different temperatures may be selected within one radiant panel, the outer edges of the panel still tend to cool down more rapidly than inner parts. It is therefore still difficult to maintain a homogeneous distribution of the temperature. Further, the construction of one panel comprising three different flow paths is complicated and expensive.

It is therefore an object of the present invention, to overcome the drawbacks of the state of the art, especially to provide an apparatus which allows creation of a uniform distribution of the radiant energy and which is manufactured in an easy and economic way.

This object is solved with an apparatus according to the characterizing portion of the independent patent claim.

The apparatus according to the invention for drying and/or polymerizing an impregnated web material has at least one treating chamber through which the web material is passed along a path. At least one first radiant panel is arranged inside the treating chamber substantially in parallel to the web material. When the web material is passed through the treating chamber, it is subjected to radiant heat created by the radiant panel. The general concept of the apparatus is very similar to the one which is disclosed in US 4,697,355, the content of which is incorporated herein by reference.

According to the present invention, the apparatus comprises at least one second radiant panel. The second radiant panel is arranged at an angle between 45° and 135°, preferably substantially perpendicular to the path for the web material. The second radiant panel is further arranged adjacent to the lateral edges of the path.

The web material is therefore surrounded on four sides by radiant panels. The second radiant panels which are arranged perpendicular to the web material and also perpendicular to the first panels allow to rise the temperature in the lateral edge areas of the web material. A homogeneous distribution of the temperature may be achieved over the entire width of the material web by means of this additional second radiant panel.

According to a preferred embodiment of the present invention, at least one first radiant panel is arranged on each side of the path for the web material. This is especially important, when the web material is impregnated on both of its sides. A second radiant panel is arranged according to this embodiment on both lateral edges of said path. The web material is, seen in the cross-section, surrounded by four radiant panels which are arranged in rectangular form.

It is possible to arrange more than one of the first radiant panels in the direction of movement of the material web along said path. The more radiant panels are arranged, the better drying rates may be achieved or the faster the web material may be passed through the treating chamber. It is preferred, that the second radiant panels are arranged at the entry of the treating chamber for the web material. It is possible, that along the treating chamber, there are sections where only first radiant panels are arranged. It is however preferred, that first and second radiant panels surround the material web over the entire height or lengths of the treating chamber.

According to a further preferred embodiment of the invention, the first and second radiant panels contact each other with their lateral edges and thereby form an enclosed cavity of substantially rectangular cross-section. The treating chamber is formed in such cases by the first and second radiant panels. If the outer surface of the radiant panels is sufficiently isolated, no additional structure of a treating chamber is necessary.

In order to allow the operator to access the web material, it is preferred that the second radiant panels are hingedly connected to the treating chamber or to the first radiant panels. If the web material should brake during operation, the inner surfaces of the radiant panels may have to be cleaned. The hinged connection between the treating chamber and the second panel allows easy access for cleaning purposes.

In order to allow creation of a variable distribution of temperature depending on specific properties of the web material to be treated, it is preferable that the first and second radiant panels each are coupled with an individually controllable heating means. This allows to create a higher temperature in the second radiant panels in order to compensate losses of heat in the lateral edge areas of the first radiant panels.

According to a further preferred embodiment of the invention, the apparatus comprises radiant panels which consist of two flat metal plates, which are arranged in parallel to and spaced from each other and which are connected to each other by bridges. These bridges form flow channels for a heat medium, especially for hot oil.

In order to control the temperature of the first and second radiant panels, the temperature and/or the flow of the heat medium, especially the hot oil may be adjusted.

While the second radiant panels according to the present invention may be used in combination with a horizontal or with a vertical drying apparatus, a vertical dryer with vertically arranged first and second radiant panels is preferred.

In the case of a vertical dryer, it is further preferred that the apparatus comprises two treating chambers. In a first treating chamber, the web material is passed upwardly through the chamber and in a second treating chamber, the web material is passed downwardly.

It is obvious to one skilled in the art, that the use of preheated fresh air is particularly advantageous. However, the present invention works with any of known dryers using radiant heat for drying and/or polymerizing impregnated web material.

The invention will be explained in a greater detail in the following description and in the drawings.
- Figure 1: is a schematic longitudinal sectional view through an apparatus according to the invention,
- Figure 2: is a horizontal section through a treating chamber of an apparatus according to figure 1,
- Figure 3: is a schematic view of a radiant panel according to the present invention,
- Figure 4: is a horizontal cross-sectional view of an alternative embodiment of the invention.

An apparatus 1 for drying an impregnated web material 2 consists substantially of two treating chambers 10 and 11 through which the web material 2 is passed along a path 25.

The web material is fed through a bath 8 comprising a synthetic resin impregnated therein and thereafter moved upwardly and vertically through the first treating chamber 10.

The web material 2 is subjected to radiant heat which is created by first radiant panels 4 arranged on both sides of the web material.

Ventilators 3 for blowing preheated fresh air into the treating chambers 10 and 11 are provided. The preheated fresh air removes volatiles which may be created in the treating chambers during drying.

After the web material 2 has quit the treating chamber 10, its direction is changed and it is passed through a second treating chamber 11 in a downward direction. The second treating chamber 11 also comprises first radiant heating panels 4 and ventilators 3 for blowing preheated fresh air into the chamber.

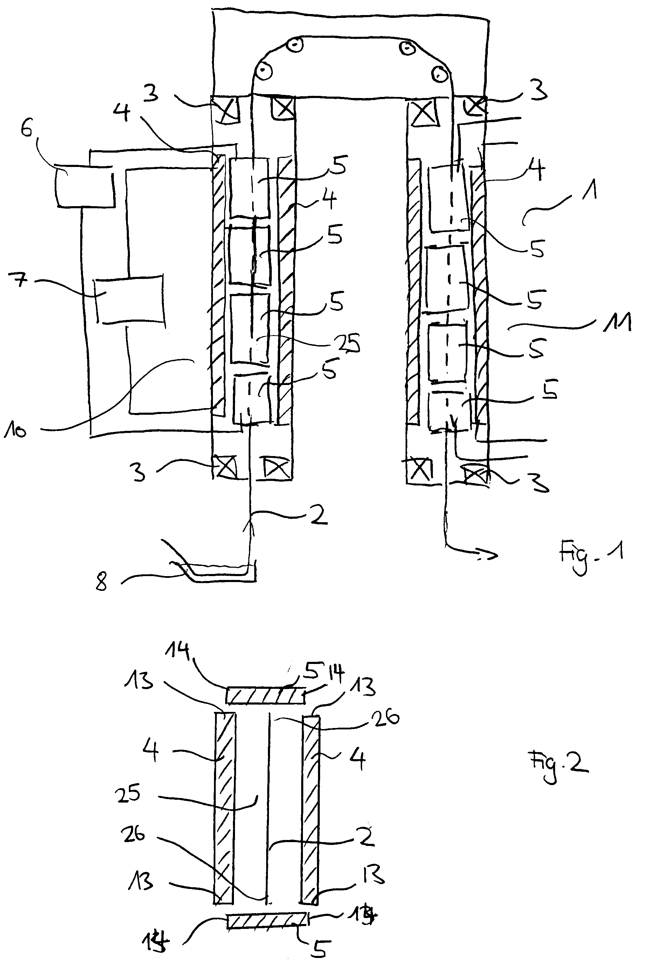

While the radiant panels 4 which are arranged on the inner surfaces of the treating chambers 10, 11 are shown as one single radiant panel in figure 1, it is clear that a plurality of different radiant panels may be used along the path for the web material 2 within the treating chambers 10, 11.

According to the present invention, supplementary second radiant panels 5 are arranged at an angle, preferably perpendicular to the path 25 for the web material 2. The second panels 5 are arranged adjacent to the lateral edges 26 of the path 25. While a plurality of second radiant panels 5 are shown in figure 5, it is clear that second radiant panels 5 could also only be arranged at the inlet of the treating chambers 10, 11 or at the inlet of the first treating chamber 10 only.

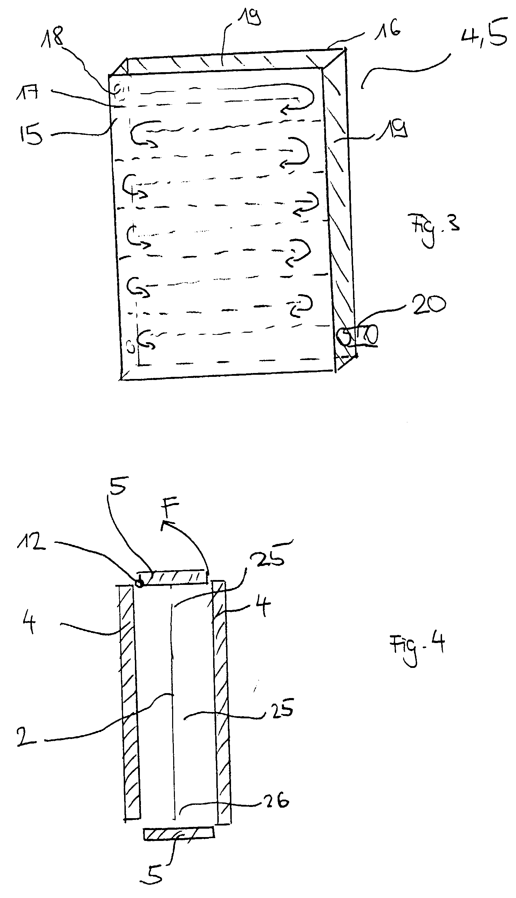

Figure 2 shows a horizontal cross-section through a treating chamber. The web material 2 is surrounded by two first radiant panels 4 which are arranged in parallel to the surface of the web material 2 and by two second radiant panels 5 which are arranged perpendicular to the path 25 for the web material 2 and to the first radiant panels 4 and adjacent the lateral edges 26 of the path 25. The radiation which is created by the second radiant panels 5 is added to the radiation created by the first radiant panels 4. A homogeneous distribution of radiation may be therefore created by means of the second radiant panels 5.

The apparatus is provided with control and heating means 6, 7 (see figure 1) which allow to individually control the temperature of the first and second radiant panels 4, 5. The heat and control means are shown in a schematic way. While it is possible to use electric heating, hot air or gas burners, heating with hot oil is preferred. The control means may control either the temperature or the flow of the heat medium or a combination thereof. The temperature of the radiant panels may be measured by any method known to one skilled in the art. The result of the measurement of the temperature is used to control the heating means.

Figure 3 shows an embodiment of a radiant panel which is preferably used according to the present invention. The radiant panel 4, 5 consists of two flat metal plates 15, 16 which are arranged in parallel to and spaced from each other. The plates 15, 16 are connected to each other by means of bridges 17 welded on the inner surfaces of the plates 15, 16. The bridges 17 form a flow path for a heat medium. The lateral edges of the panels 15, 16 are closed by side surfaces 19. Connections 20 are provided for inlet and outlet of a heat medium.

Figure 4 shows an alternative embodiment of an apparatus in a horizontal cross-section. The embodiment of figure 4 is different from the embodiment of figure 2 in that one of the second radiant panels is hingedly connected by a hinge 12 to the apparatus. The hinge 12 may be connected either to one of the first radiant panels 4 or to a structure defining one of the treating chambers 10, 11. The second radiant panel 5 may be opened along the flash line F which allows easy access to the interior of the treating chamber, e.g. for cleaning purposes.

## Claims

1. An apparatus (1) for drying and/or polymerizing an impregnated web material (2) having
at least one treating chamber (10, 11) through which the web material (2) is passed along a path (25) for the web material (2)
and at least one first radiant panel (4) arranged inside said treating chamber (10, 11) substantially in parallel to said path to subject the web material to radiant energy,
characterized in that the apparatus (1) comprises at least one second radiant panel (5) arranged at an angle between 45° and 135° to the path for the web (25) material and adjacent to the lateral edges (26) of said path.

2. An apparatus (1) according to claim 1, characterized in that at least one first radiant panel (4) is arranged on each side of said path (25) for the web material and in that a second radiant panel (5) is arranged adjacent to both lateral edges (26) of said path.

3. An apparatus according to one of the claims 1 or 2, characterized in that more than one first radiant panel (4) is arranged in the direction of said path (25).

4. An apparatus according to one of the claims 1 to 3, characterized in that the first and second radiant panels (4, 5) contact each other with their lateral edges (13, 14), thereby forming a cavity of substantially rectangular cross-section.

5. An apparatus according to one of the claims 1 to 4, characterized in that at least one of the second radiant panels (5) is hingedly connected to the treating chamber (10, 11).

6. An apparatus according to one of the claims 1 to 5, characterized in that the first and the second radiant panels (4, 5) each are coupled with an individually controllable heating means (6, 7).

7. An apparatus according to one of the claims 1 to 6, characterized in that the radiant panels (4, 5) comprise two flat metal plates, arranged in parallel to and spaced from each other and which are connected to each other by bridges, said bridges forming flow channels (18) for a heat medium.

8. An apparatus according to one of the claims 1 to 7, characterized in that the first and second radiant panels (4, 5) are arranged vertically and that the path (25) is arranged vertically within said treating chambers (10, 11).

9. An apparatus according to claim 8, characterized in that it comprises two treating chambers (10, 11), wherein the web material (2) is passed upwardly through a first treating chamber (10) and wherein the web material (2) is passed downwardly through a second treating chamber (11).
